# EUROPEAN PATENT SPECIFICATION

(11) **EP 3 455 490 B1**
(45) Date of publication and mention of the grant of the patent: **12.08.2020**
(21) Application number: 17721728.8
(22) Date of filing: 08.05.2017
(51) Int. Cl.: F03B 13/26, F16B 2/02

(54) **WATER CURRENT POWER GENERATING SYSTEMS**
WASSERSTRÖMUNGSTROMERZEUGUNGSSYSTEME
SYSTÈMES DE GÉNÉRATION D'ÉNERGIE À COURANT DE FOND

(30) Priority: 10.05.2016 GB 201608149
(43) Date of publication of application: 20.03.2019
(73) Proprietor: GE Energy (UK) Limited, Altrincham, Cheshire WA14 2DT (GB)
(72) Inventor: RHYMES, Jonathan Paul, Bristol Gloucester BS1 3AG (GB)
(74) Representative: Openshaw & Co.
(86) International application number: PCT/EP2017/060955
(87) International publication number: WO 2017/194482

(56) References cited:
- WO-A1-2016/034840
- WO-A2-2013/110928
- GB-A- 2 496 050
- GB-A- 2 507 730
- US-A1- 2014 318 117
- US-A1- 2015 204 312

## Description

The present invention relates to water current power generating systems, and in particular to such systems which employ removable power generating apparatus.

### BACKGROUND OF THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The rotor assembly includes a plurality of rotor blades that are driven by the water flow, so as to turn an input shaft of the drivetrain.

In order to be economically practical, multiple water current turbine devices need to be deployed in a suitable area. For example, a tidal turbine farm may have tens to hundreds of turbines. The turbines are preferably arranged in an array having multiple rows of multiple turbines. The turbine array could be deployed in a tidal flow area, a river flow, an ocean current, or any other suitable water current area. Although it is preferable for the turbines to be arranged in an array, geography, bathymetry and other factors may mean that a turbine farm has another arrangement.

Such turbine equipment needs to be secured to the bed of a body of water, such as a sea, estuary or river. Conventional underwater turbines used to drive electrical generators are mounted on a horizontal rotational axis and require a significant amount of ancillary features, in order to maximise energy capture. One such feature that is essential for efficient energy generation is yaw capability: it must be possible to direct the turbine to the most effective orientation with respect to the direction of current flow at any particular time.

Installation, maintenance and servicing of underwater power generation apparatus, particularly in deep sea environments, are highly costly and time consuming procedures. It is therefore desirable to simplify the construction and deployment of underwater power generation apparatus, lowering capital cost and reducing the frequency with which in service intervention is required.

US 2014/318117 A1 describes water current power generation systems.

### SUMMARY OF THE INVENTION

According to one aspect of the present invention, there is provided a water current power generating system comprising one or more of the following: a support structure located on the bed of a body of water, the support structure preferably defining a first support surface; a transition piece having a first engagement surface, and a second support surface spaced apart from the first engagement surface, the transition piece preferably being mounted on the support structure such that the first engagement surface abuts the first support surface; a first clamp mechanism for releasably attaching the transition piece to the support structure; a power generating apparatus having a second engagement surface, and preferably including a rotor assembly, preferably an electrical power generating unit rotatable by the rotor assembly and operable to output electrical power, and preferably an electrical output for export of electrical power from the power generating apparatus, the power generating apparatus preferably being releasably attached to the second support surface of the transition piece such that the second engagement surface may abut the second support surface; a second clamp mechanism for releasably attaching the power generating apparatus to the second support surface, wherein the transition piece preferably includes a connection means to which the electrical output of the power generating apparatus is releasably electrically connected, and preferably an export connector to which a power export cable of the system is connected.

According to another aspect of the present invention, there may be provided a mounting system for a water current power generating system which may include a support structure for location on the bed of a body of water, and preferably a power generating apparatus including rotor assembly, preferably an electrical power generating unit rotatable by the rotor assembly and operable to output electrical power, and preferably an electrical output for export of electrical power from the power generating apparatus, the mounting system preferably comprising one or more of the following: a transition piece having an engagement surface and a support surface preferably spaced apart from the engagement surface, the transition piece may be mountable on such a support structure such that the first engagement surface may abut a first support surface of the support structure, and the support surface may be arranged for receiving a power generating apparatus thereon; a first clamp mechanism for releasably attaching the transition piece to such a support structure; a second clamp mechanism for releasably attaching the power generating apparatus to the second support surface; a connection means to which an electrical output of the power generating apparatus may be releasably electrically connectable; and an export connector electrically connected with the connection means and to which a power export cable of the system may be releasably electrically connectable.

In one example, the second clamp mechanism may have a first position in which the power generating apparatus may be removable from the transition piece, a second position in which the power generating apparatus may be fixed to the transition piece, and a third position in which the power generating apparatus may be rotatable with respect to, and not removable from, the transition piece.

In one example, the connection means of the transition piece may be fixed in position within the transition piece, and wherein the transition piece may comprise a side wall which defines an aperture therethrough, the export cable preferably extending through the aperture.

In one example, the connection means of the transition piece may be fixed in position within the transition piece, and may comprise an electrical connector connected with the electrical output of the power generating apparatus, preferably an export connector may be located in a side wall of the transition piece, and preferably an internal cable electrically may connect the electrical connector with the export connector, the export connector preferably providing an external connection to which the export cable may be connected.

In one example, the first engagement surface may have a diameter smaller than that of the second support surface.

According to another aspect of the present invention there is provided a method of using a water current system or mounting system as set out above.

Features of any of the above aspects of the invention may be readily combined with one or more features of another aspect of the invention.

### BRIEF DESCRIPTION OF THE DRAWINGS

Figure 1 illustrates a water current power generating apparatus;
Figure 2 illustrates a first support structure for the apparatus of Figure 1;
Figure 3 illustrates a second support structure for the apparatus of Figure 1;
Figure 4 illustrates the power generating apparatus of Figure 1 in place on the support structure of Figure 3;
Figure 5 is a detailed view of parts of the arrangement shown in Figure 4;
Figure 6 illustrates a first example of an export connection for the arrangement of Figure 5; and
Figure 7 illustrates a first example of an export connection for the arrangement of Figure 5.

### DETAILED DESCRIPTION OF THE PREFERRED EMBODIMENTS

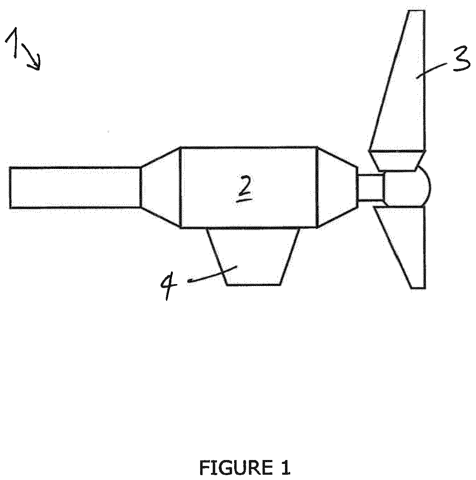

Figure 1 illustrates a water current power generating apparatus (PGA) 1 comprising an apparatus body 2, rotatable turbine 3, and an engagement portion 4. The water current PGA 1 is designed to be located underwater, for example, in a tidal body of water. The apparatus body 2 defines an inner space in which electrical power generating equipment is located. The electrical power generating equipment may include an electrical generator, a gearbox, and control equipment, as appropriate. The electrical power generating equipment is driven by a drive shaft that extends into the apparatus body 2, and which is caused to turn by the rotatable turbine 3. As a water current flows past the power generating apparatus 1, the rotatable turbine 3 is caused to rotate with respect to the apparatus body 2 and the equipment contained therein. This rotation causes a driveshaft to rotate, thereby causing the generator to rotate and generate electrical power. The rotatable turbine 3 may have any number of blades. The engagement portion 4 provides a substantially circular engagement surface for connection with a support structure.

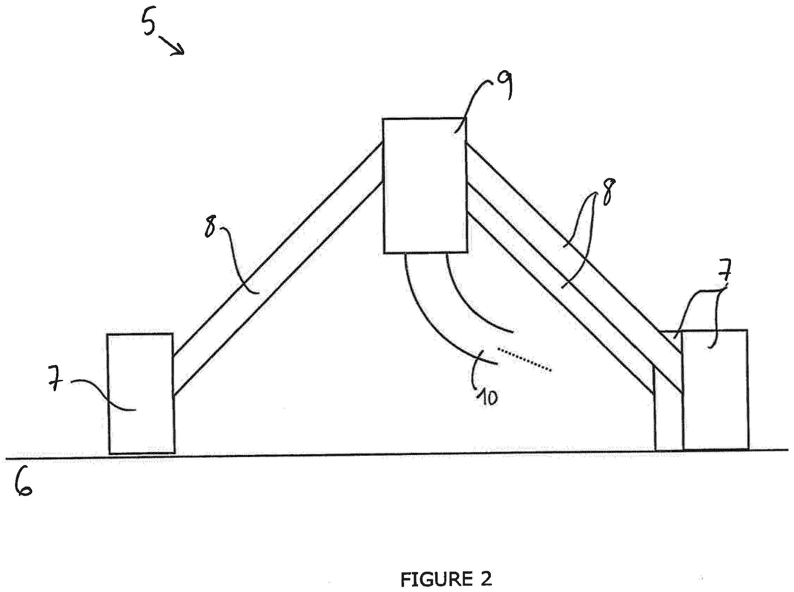

The PGA 1 must be supported in the body of water at an appropriate position in a body of water. The PGA 1 of Figure 1 is intended to be removable from such a support structure in order that the PGA 1 is able to be recovered for maintenance purposes. Figure 2 illustrates a first example support structure 5 for supporting the PGA 1. The support structure 5 is in the form of a tripod which is located on the bed 6 of a body of water. The support structure 5 comprises three support feet 7, from which respective support legs 8 extend. A PGA support 9 is held in place at a suitable position by the support legs 8. In the example shown in Figure 2, the support structure 5 provides a single, centrally mounted PGA support 9. In use, the PGA 1 is mounted for releasable engagement on the PGA support 9. The support structure 5 is secured to the bed 6 by the support feet 7, which may be pinned to the bed 6 using suitable pile structures.

The support structure 5 has an advantage that the centrally located PGA support 9 can have an open lower portion through which an electricity export cable 10 can be connected with the PGA when mounted on the PGA support 9. The PGA support 9 may include suitable connection systems for releasable connection of electrical control and instrumentation connections to the PGA 1. The PGA support 9 is raised above the bed 6 and so is accessible for connection of the electricity export cable 10 (and other connections). However, a support structure 5 in the form tripod can be expensive, particularly because of the need for multiple engagements with the bed 6.

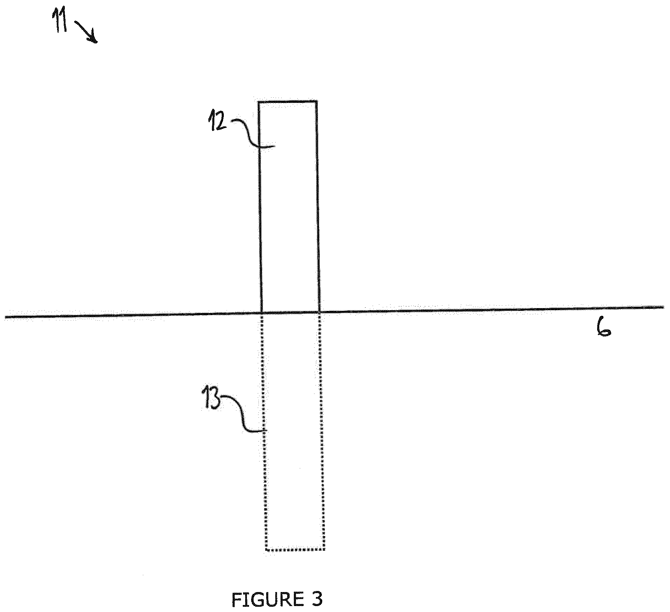

Figure 3 illustrates a second support structure for use with the PGA 1 of Figure 1. The second support structure 11 is a so-called "mono-pile", which consists of a single elongate cylindrical structure that has a first portion 12 extending above the bed 6 and a second portion 13 which extends into, and is supported by, the bed 6. A mono-pile has the advantage that it provides a more cost-effective support structure than the tripod of Figure 2, since the structure itself is simpler and requires only one drilling and securing operation. One obvious disadvantage of a mono-pile support structure is that the outer diameter of the support structure 11 must be smaller than the inner diameter of the hole drilled in the bed 6 for location of the second portion 13 of the support structure 11. Accordingly, in order to remain cost-effective, it is desirable to reduce the diameter of the drilled hole so as to reduce the size of drill required, whilst maintaining the required structure size for supporting the PGA.

In addition, location of the support structure 11 in the bed 6 must take place without any connection or locating equipment for the PGA being attached to the support structure 11 in order to minimise the risk of damage to such equipment. Attaching the connection and locating equipment to the support structure 11 after mounting in the bed 6 involves costly, difficult and risky marine operations. Furthermore, the support structure 11 does not have an open aperture through which the electricity export cable, and other connections, can pass. It is not desirable to provide an aperture in the wall of the support structure 11 since this could cause weakness in the support structure and/or require the use of thicker and heavier material for the wall of the support structure 11.

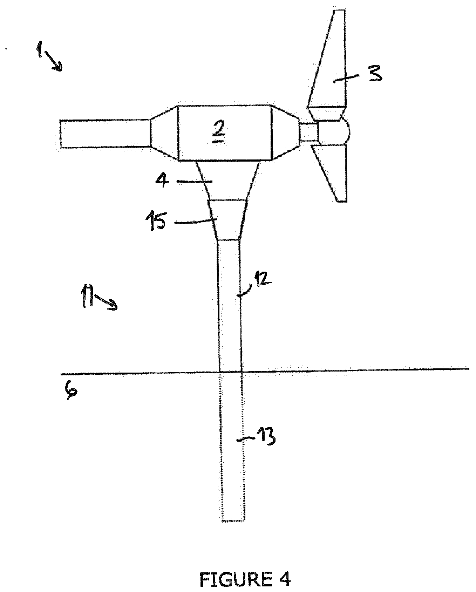

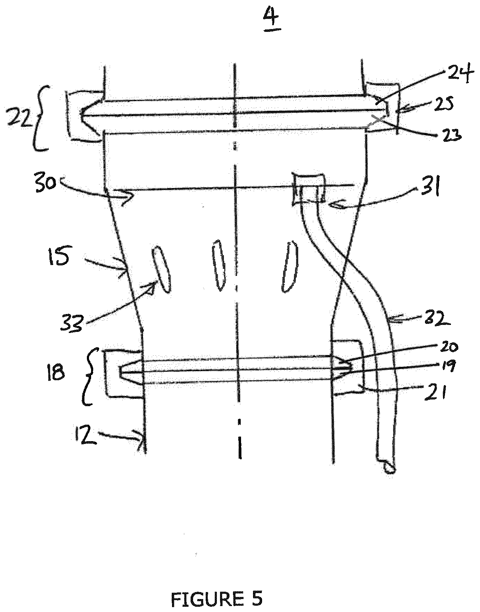

Figure 4 illustrates the PGA 1 in place on the support structure 11 which has the first portion 12 extending above the bed 6 and the second portion 13 extending into the bed 6. The outer diameter of the first portion 12 of the second support structure 11 is smaller than the diameter of the engagement portion 4 of the PGA 1, and so a transition piece 15 is provided in the arrangement shown in Figure 4. The transition piece 15 is attached to an upper end region of the first portion 12 of the support structure 11. A lower end region of the engagement portion 4 of the PGA 1 is attached to an upper portion of the transition piece 15. The transition piece 15 is shown in more detail in Figure 5.

Figure 5 illustrates the transition piece 15 of Figure 4, connected with parts of the PGA 1 and support structure 11. The transition piece 15 is substantially circular in cross-section and has a lower end region 16 and an upper end region 17 spaced apart from the lower end region 16. The upper end region 17 has a larger diameter than that of lower end region 16. The lower end region is sized to match substantially the diameter of the support structure 11. The upper end region 17 is sized to match substantially the diameter of the engagement surface of the engagement portion 4 of the PGA 1.

The lower end region 16 mounts on the first portion 12 of the support structure 11 by way of a first mounting system 18. The first mounting system 18 comprises first and second cooperating flanges 19 and 20 located on, and attached to, the support structure 11 and transition piece 15 respectively, and a first clamp 21. The first flange 19 defines a first support surface, and the second flange 20 defines a first engagement surface. The first engagement surface abuts the first support surface, such that the transition piece 15 is supported by the support structure 11. The first and second flanges 19 and 20 may include cooperating features of shape that resist turning of the transition piece 15 with respect to the support structure 11.

The first clamp 21 holds the transition piece 15 in place on the support structure 11. The first clamp 21 has two positions; a first in which the transition piece 15 is removable from the support structure 11, and a second in which the transition piece is fixed in positon on the support structure 11. In the first position of the first clamp 21, the transition piece 15 can be removed from the support structure 11 and replaced with a replacement transition piece 15, for example for maintenance purposes. The first clamp 21 is preferably attached to the transition piece 15 so that it is removable with the transition piece 15.

The PGA 1 is located on the upper end region 17 of the transition piece 15 by way of a second mounting system 22. The second mounting system 22 comprises third and fourth cooperating flanges 23 and 24 located on, and attached to, the transition piece 15 and PGA 1 respectively, and a second clamp 25. The third flange 23 defines a second support surface, and the fourth flange 20 defines a second engagement surface. The second engagement surface abuts the second support surface, such that the PGA 1 is supported by the transition piece.

The second clamp 25 holds the PGA 1 in place on the transition piece 15. The second clamp 21 has at least two positions; a first in which the PGA 1 is removable from the transition piece 15, and a second in which the PGA 1 is fixed in position on the transition piece 15. The second clamp 21 is preferably attached to the transition piece 15 so that it is removable with the transition piece 15. The second clamp 25 may have a third position in which the PGA 1 is rotatable with respect to the transition piece 15, but is not removable therefrom. In such a third position of the second clamp 25, the PGA 1 may be re-oriented in order to face the water current flow for generation of electricity.

The transition piece 15 includes additional equipment for connection with the PGA 1. A connection plate 30 is provided within the transition piece 15, and provides a location for appropriate electrical and optical connections. In particular, the connection plate 30 provides an electrical power connection for releasable connection with the generator output from the PGA 1. The electrical power connection of the connection plate 30 is arranged such that attachment of the PGA 1 to the support structure 11 is able to cause the generator output of the PGA 1 to be connected electrically with the electrical power connector. Alternatively, the electrical connection between the generator output and the electrical power connector can be achieved following attachment of the PGA 1 to the support structure 11. Additional connections, such as optical communications connections for control purposes may also be provided.

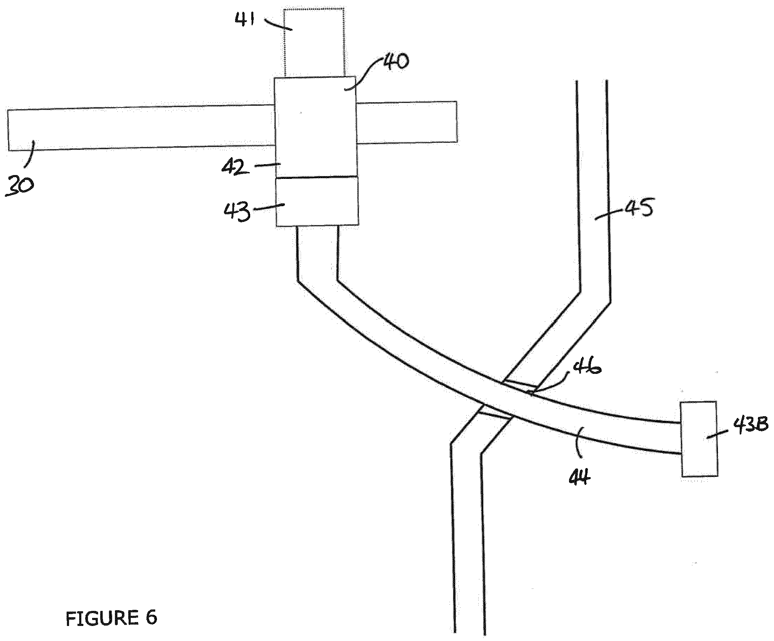

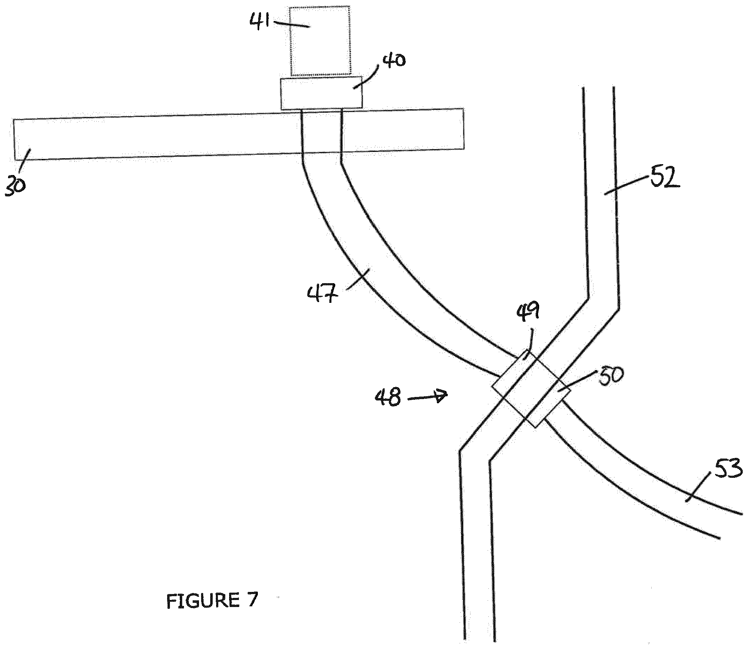

In the example of Figure 5, an export cable 32 is provided through an aperture in the transition piece 15. The export cable 32 connects with an appropriate connector 31 which provides a connection to the PGA 1. Examples of the export connection are shown in more detail in Figures 6 and 7.

The transition piece 15 may also be provided with anodic protection 33 for corrosion protection of the transition piece and of the support structure itself. Having the anodic protection 3 attached to the transition piece 15 means that the anodic protection can be replaced in a straightforward manner when the transition piece has been removed from the water for maintenance.

Figure 6 illustrates a first example of an export connection. The connection plate 30 is provided in the transition piece 15, and carries a first electrical connector 40. The first electrical connector 40 is for electrical connection to an electrical output 41 from the PGA, for transfer of electrical power from the generator of the PGA out of the system.

The connection plate 30 is also provided with a second electrical connector 42 for connection with a terminal connector 43 of an export cable 44. The second electrical connector 42 and terminal connector 43 may provide a "wet-mate" connector of the type which is connectable in water. The export cable 44 extends through an aperture 46 of a side wall 45 of the transition piece 15 for connection with the electricity supply grid.

During installation of the system, the support structure is located in the bed of the body of water without the transition piece or PGA being attached. This allows for the straightforward installation of the support structure 11. In a separate operation, the transition piece 15 is connected with the export cable 44 (and other connections as appropriate) above water. The export cable is passed through the aperture 46 and connected with the second electrical connector 42. The export cable 44 is preferably provided with a second terminal connector 43B outside of the transition piece for connection to an underwater cable. The transition piece 15 is then lowered into place onto the support structure 11. The first clamp 21 is closed to hold the transition piece 15 in place on the support structure 11. The second terminal connection 43B is connected with an undersea cable. In this configuration, the support structure 11 and transition piece 15 are ready for receipt of a PGA 1. The PGA 1 is lowered onto the upper region 17 of the transition piece 15, and the electrical output 41 connected with the first electrical connector 40 on the connection plate 30. In this way, the PGA 1 is electrically connected with the export cable 44 for export of electrical power. The second clamp 25 is operated in order to hold the PGA 1 in place on the transition piece 15.

Figure 7 illustrates a second example export connection configuration. In the Figure 7 example, the connection plate 30 is again provided in the transition piece 15, and carries the first electrical connector 40. The first electrical connector 40 is for electrical connection to the electrical output 41 from the PGA, for transfer of electrical power from the generator of the PGA out of the system.

In the Figure 7 example, the first electrical connector 40 provides a terminal connection on one end of an internal cable 47. The other end of the internal cable is connected with an internal side 49 of an export connector 48. The export connector extends through a side wall 52 of the transition piece 15, and provides an external connector 50. A terminal connector 51 of an export cable 53 is releasably electrically connected with the external connector 50 of the export connector 48. The export cable 53 extends for connection with the electricity supply grid.

Either or both sides of the export connector 48 may be "wet-mate" connectors of the type which is connectable in water.

During installation of the system including the Figure 7 export connections, the support structure is located in the bed of the body of water without the transition piece or PGA being attached. This allows for the straightforward installation of the support structure 11. In a separate operation, the transition piece 15 (including the connection plate 30, first electrical connector 40, internal cable 47 and export connector 48) is then lowered into place onto the support structure 11. The first clamp 21 is closed to hold the transition piece 15 in place on the support structure 11. The terminal connector 51 of the export cable 53 is then connected with the external connector 50 of the export connector 48. In this configuration, the support structure 11 and transition piece 15 are ready for receipt of a PGA 1. The PGA 1 is then lowered onto the upper region 17 of the transition piece 15, and the electrical output 41 connected with the first electrical connector 40 on the connection plate 30. In this way, the PGA 1 is electrically connected with the export cable 53 for export of electrical power. The second clamp 25 is operated in order to hold the PGA 1 in place on the transition piece 15.

It will be appreciated that embodiments of the present invention provide a means by which removable power generating apparatus can be attached to a mono-pile type support structure without the need to increase the outer diameter of the mono-pile, and without the need to provide access apertures in the mono-pile.

In addition, attachment of the export cable to a connection plate held in the transition piece can be accomplished out of the water, which greatly simplifies installation and maintenance operations.

The aforementioned is not intended to be limiting with respect to the scope of the appended claims. Various substitutions, alterations, and modifications may be made to the invention without departing from the scope of the invention as defined by the claims.

## Claims

1. A mounting system for a water current power generating system which includes a support structure (11) for location on the bed of a body of water, and a power generating apparatus (1) including rotor assembly, an electrical power generating unit rotatable by the rotor assembly and operable to output electrical power, and an electrical output for export of electrical power from the power generating apparatus (1), the mounting system comprising:
a transition piece (15) having a first engagement surface and a second support surface spaced apart from the engagement surface, the transition piece (15) being mountable on such a support structure (11) such that the first engagement surface abuts a first support surface of the support structure (11), and the second support surface being arranged for receiving a power generating apparatus (1) thereon;
a first clamp mechanism (21) for releasably attaching the transition piece (15) to such a support structure (11);
a second clamp mechanism (25) for releasably attaching the power generating apparatus (1) to the second support surface;
a connection means to which an electrical output of the power generating apparatus (1) is releasably electrically connectable; and
an export connector electrically connected with the connection means and to which a power export cable (44, 53) of the system is releasably electrically connectable;
wherein the transition piece (15) further comprises a side wall (45) extending between the first engagement surface and the second support surface; and either:
the side wall (45) comprises an aperture (46) therethrough, and the export cable (44) extends through the aperture (46); or
the export connector (48) is located in a side wall (45) of the transition piece (15), and provides an internal connection (49) which is electrically connected with the connection means, and an external connection (50) to which a power export cable (53) of the system is releasably electrically connectable.

2. A mounting system as claimed in claim 1, wherein the second clamp mechanism (25) has a first position in which such a power generating apparatus (1) is removable from the transition piece (15), a second position in which such a power generating apparatus (1) is fixed to the transition piece (15), and a third position in which such a power generating apparatus (1) is rotatable with respect to, and not removable from, the transition piece (15).

3. A mounting system as claimed in claim 1 or 2, wherein the export connector is located on the connection means.

4. A mounting system as claimed in claim 3, wherein the connection means of the transition piece (15) is fixed in position within the transition piece (15).

5. A mounting system as claimed in any one of claims 1 to 4, wherein the first engagement surface has a diameter smaller than that of the second support surface.

6. A water current power generating system comprising:
a support structure (11) located on the bed of a body of water, the support structure (11) defining a first support surface;
a mounting system according to any of claims 1 to 5,
a power generating apparatus (1) having a second engagement surface, and including a rotor assembly, an electrical power generating unit rotatable by the rotor assembly and operable to output electrical power, and an electrical output for export of electrical power from the power generating apparatus (1), the power generating apparatus (1) being releasably attached to the second support surface of the transition piece (15) such that the second engagement surface abuts the second support surface; and
wherein the electrical output of the power generating apparatus (1) is releasably electrically connected to the connection means

## Patentansprüche

1. Befestigungssystem für ein Wasserstromleistungserzeugungssystem, das eine Stützstruktur (11) für eine Platzierung auf dem Bett eines Gewässers, und eine Leistungserzeugungseinrichtung (1) beinhaltet, die eine Rotoranordnung, eine elektrische Leistungserzeugungseinheit, die durch die Rotoranordnung drehbar und betriebsfähig ist, um elektrische Leistung auszugeben, und eine elektrische Ausgabe für einen Export von elektrischer Leistung aus der Leistungserzeugungseinrichtung (1) beinhaltet, wobei das Befestigungssystem Folgendes umfasst:
ein Übergangsstück (15), das eine erste Eingriffsoberfläche und eine zweite Stützoberfläche aufweist, die von der Eingriffsoberfläche beabstandet ist, wobei das Übergangsstück (15) auf einer derartigen Stützstruktur (11) derart befestigbar ist, dass die erste Eingriffsoberfläche an einer ersten Stützoberfläche der Stützstruktur (11) anstößt, und wobei die zweite Stützoberfläche zum Aufnehmen einer Leistungserzeugungseinrichtung (1) darauf angeordnet ist;
einen ersten Klemmmechanismus (21) zum lösbaren Anbringen des Übergangsstücks (15) an einer derartigen Stützstruktur (11);
einen zweiten Klemmmechanismus (25) zum lösbaren Anbringen der Leistungserzeugungseinrichtung (1) an der zweiten Stützoberfläche;
ein Verbindungsmittel, mit dem eine elektrische Ausgabe der Leistungserzeugungseinrichtung (1) lösbar elektrisch verbindbar ist; und
einen Exportverbinder, der mit den Verbindungsmitteln elektrisch verbunden ist und mit dem ein Leistungsexportkabel (44, 53) des Systems lösbar elektrisch verbindbar ist;
wobei das Übergangsstück (15) ferner eine Seitenwand (45) umfasst, die sich zwischen der ersten Eingriffsoberfläche und der zweiten Stützoberfläche erstreckt; und entweder:
die Seitenwand (45) dahindurch eine Öffnung (46) umfasst, und das Exportkabel (44) sich durch die Öffnung (46) erstreckt; oder
der Exportverbinder (48) in einer Seitenwand (45) des Übergangsstücks (15) platziert ist und eine interne Verbindung (49), die mit den Verbindungsmitteln elektrisch verbunden ist, und eine externe Verbindung (50) bereitstellt, mit der das Leistungsexportkabel (53) des Systems lösbar elektrisch verbindbar ist.

2. Befestigungssystem nach Anspruch 1, wobei der zweite Klemmmechanismus (25) eine erste Position, in der eine solche Leistungserzeugungseinrichtung (1) von dem Übergangsstück (15) entfernbar ist, eine zweite Position, in der eine solche Leistungserzeugungseinrichtung (1) an dem Übergangsstück (15) befestigt ist, und eine dritte Position aufweist, in der eine solche Leistungserzeugungseinrichtung (1) hinsichtlich des Übergangsstücks (15) drehbar und nicht von diesem entfernbar ist.

3. Befestigungssystem nach Anspruch 1 oder 2, wobei der Exportverbinder auf dem Verbindungsmittel platziert.

4. Befestigungssystem nach Anspruch 3, wobei das Verbindungsmittel des Übergangsstücks (15) in seiner Position innerhalb des Übergangsstücks (15) fixiert ist.

5. Befestigungssystem nach einem der Ansprüche 1 bis 4, wobei die erste Eingriffsoberfläche einen Durchmesser aufweist, der kleiner als der der zweiten Stützoberfläche ist.

6. Wasserstromleistungserzeugungssystem, Folgendes umfassend:
eine Stützstruktur (11), die auf dem Bett eines Gewässers platziert ist, wobei die Stützstruktur (11) eine erste Stützoberfläche definiert;
ein Befestigungssystem nach einem der Ansprüche 1 bis 5,
eine Leistungserzeugungseinrichtung (1), die eine zweite Eingriffsoberfläche aufweist, und eine Rotoranordnung, eine elektrische Leistungserzeugungseinheit, die durch die Rotoranordnung drehbar und betriebsfähig ist, um elektrische Leistung auszugeben, und eine elektrische Ausgabe für den Export von elektrischer Leistung aus der Leistungserzeugungseinrichtung (1) beinhaltet, wobei die Leistungserzeugungseinrichtung (1) an der zweiten Stützoberfläche des Übergangsstücks (15) derart lösbar angebracht ist, dass die zweite Eingriffsoberfläche an der zweiten Stützoberfläche anstößt; und
wobei die elektrische Ausgabe der Leistungserzeugungseinrichtung (1) mit den Verbindungsmitteln lösbar elektrisch verbunden ist.

## Revendications

1. Système de montage pour un système de génération d'énergie hydrolienne qui comporte une structure de support (11) pour un emplacement sur le lit d'une masse d'eau, et un appareil générateur d'énergie (1) comportant un ensemble rotor, une unité génératrice d'énergie électrique pouvant tourner par l'ensemble rotor et pouvant fonctionner pour produire de l'énergie électrique, et une sortie électrique pour exporter de l'énergie électrique à partir de l'appareil générateur d'énergie (1), le système de montage comprenant :
une pièce de transition (15) ayant une première surface d'entrée en prise et une seconde surface de support espacée de la surface d'entrée en prise, la pièce de transition (15) pouvant être montée sur une telle structure de support (11) de sorte que la première surface d'entrée en prise bute contre une première surface de support de la structure de support (11), et la seconde surface de support étant agencée pour recevoir un appareil générateur d'énergie (1) sur celle-ci ;
un premier mécanisme de serrage (21) pour relier de manière amovible la pièce de transition (15) à une telle structure de support (11) ;
un second mécanisme de serrage (25) pour relier de manière amovible l'appareil générateur d'énergie (1) à la seconde surface de support ;
un moyen de connexion auquel une sortie électrique de l'appareil générateur d'énergie (1) peut être reliée électriquement de manière amovible ; et
un raccord d'exportation relié électriquement au moyen de connexion et auquel un câble d'exportation d'énergie (44, 53) du système peut être relié électriquement de manière amovible ;
dans lequel la pièce de transition (15) comprend en outre une paroi latérale (45) s'étendant entre la première surface d'entrée en prise et la seconde surface de support ; et soit :
la paroi latérale (45) comprend une ouverture (46) à travers elle, et le câble d'exportation (44) s'étend à travers l'ouverture (46) ; ou
le raccord d'exportation (48) est situé dans une paroi latérale (45) de la pièce de transition (15), et fournit une connexion interne (49) qui est reliée électriquement au moyen de connexion, et une connexion externe (50) à laquelle un câble d'exportation d'énergie (53) du système peut être relié électriquement de manière amovible.

2. Système de montage selon la revendication 1, dans lequel le second mécanisme de serrage (25) a une première position dans laquelle un tel appareil générateur d'énergie (1) est amovible à partir de la pièce de transition (15), une deuxième position dans laquelle un tel appareil générateur d'énergie (1) est fixé à la pièce de transition (15), et une troisième position dans laquelle un tel appareil générateur d'énergie (1) peut tourner par rapport à la pièce de transition (15) et ne peut pas être retirée de celle-ci.

3. Système de montage selon la revendication 1 ou 2, dans lequel le raccord d'exportation est situé sur le moyen de connexion.

4. Système de montage selon la revendication 3, dans lequel le moyen de connexion de la pièce de transition (15) est fixé en position à l'intérieur de la pièce de transition (15).

5. Système de montage selon l'une quelconque des revendications 1 à 4, dans lequel la première surface d'entrée en prise a un diamètre inférieur à celui de la seconde surface de support.

6. Système de génération d'énergie hydrolienne comprenant :
une structure de support (11) située sur le lit d'une masse d'eau, la structure de support (11) définissant une première surface de support ;
un système de montage selon l'une quelconque des revendications 1 à 5, un appareil générateur d'énergie (1) ayant une seconde surface d'entrée en prise, et comportant un ensemble rotor, une unité génératrice d'énergie électrique pouvant tourner par l'ensemble rotor et pouvant fonctionner pour produire de l'énergie électrique, et une sortie électrique pour exporter de l'énergie électrique à partir de l'appareil générateur d'énergie (1), l'appareil générateur d'énergie (1) étant fixé de manière amovible à la seconde surface de support de la pièce de transition (15) de telle sorte que la seconde surface d'entrée en prise bute contre la seconde surface de support ; et
dans lequel la sortie électrique de l'appareil générateur d'énergie (1) est reliée électriquement de manière amovible au moyen de connexion.
